# EUROPEAN PATENT APPLICATION

(11) **EP 0 904 825 A2**
(43) Date of publication of application: **31.03.1999**
(21) Application number: 98307260.4
(22) Date of filing: 08.09.1998
(51) Int. Cl.: B01D 53/047

(54) **Removal of carbon dioxide from air**

(30) Priority: 30.09.1997 US 941498
(71) Applicant: THE BOC GROUP, INC., Murray Hill, New Providence, New Jersey 07974-2082 (US)
(72) Inventor: Jain, Ravi, Bridgewater, New Jersey 08807 (US); Deng, Shuguang, Somerville, New Jersey 08876 (US)
(74) Representative: Wickham, Michael

(57) **Abstract**

A PSA process for purifying a gas stream, for example, of air, by removal of carbon dioxide impurity employs a blend or composite of activated alumina and a zeolite that is a selective adsorbent of carbon dioxide. The combined adsorbent results in a higher sieve specific product and lower vent loss as compared to a PSA process utilising activated alumina alone. Any moisture present in the gas stream is removed by the combination adsorbent or by a preliminary layer of desiccant. The method is particularly useful for the prepurification of atmospheric air by pressure swing adsorption.

## Description

This invention relates to the purification of gases, and more particularly to the removal of carbon dioxide and moisture from atmospheric air by adsorption.

It is often desirable or necessary to remove certain impurities, such as carbon dioxide and moisture, in the form of water vapour, from a gas stream prior to further processing of the gas stream. For example, conventional air separation units (ASUs) for the production of nitrogen and oxygen by the cryogenic separation of air basically comprise of a two-stage distillation column which operates at very low temperatures. Due to the extremely low temperatures, it is essential that water vapour and carbon dioxide be removed from the compressed air feed to an ASU. If this is not done, the low temperature sections of the ASU will freeze up, making it necessary to halt production and warm the clogged sections to revaporize and remove the offending solid mass of frozen gases. This can be very costly. It is generally recognised that, in order to prevent freeze-up of an ASU, the content of water vapour and carbon dioxide in the compressed air feed stream must be less than 0.1 ppm and 1.0 ppm, by volume, respectively.

Current commercial methods for the pre-purification of gases include temperature swing adsorption (TSA) and pressure swing adsorption (PSA). In TSA pre-purification, the impurities are removed at low temperature, typically at about 5°C, and regeneration is carried out at elevated temperatures, e.g. from about 150-250°C. The amount of product gas required for regeneration is typically only about 12%-15%. However, TSA processes require both refrigeration units to chill the feed gas and heating units to heat the regeneration gas. They are, therefore, disadvantageous both in terms of capital costs and energy consumption.

PSA processes are an attractive alternative to TSA processes since, in PSA processes, both adsorption and regeneration are carried out at ambient temperature. PSA processes, in general, do require substantially more regeneration gas than TSA, which can be disadvantageous when high recovery of purified gas products is desired. This disadvantage can be substantially reduced, however, in a cryogenic plant which has a substantial waste stream, e.g. about 40% of the feed. Such streams are ideal as regeneration gas since they are impurity free, i.e. free of water vapour and carbon dioxide, and would be vented in any event. However, although many pre-purification methodologies based on PSA have been proposed in the literature, few are actually being used commercially due to high capital and energy costs associated therewith.

US-A- 4,711,645 describes a pre-purification PSA process utilising activated alumina for removal of water vapour and a zeolite for carbon dioxide removal. It is stated in this patent that the use of activated alumina for water removal allows adsorption at a lower temperature and, therefore, carbon dioxide adsorption takes place at a lower temperature. Both adsorption and desorption take place at close to ambient temperature.

In the PSA cycle described in DE-A- 3,702,190, at least 80% of the heat of adsorption is retained in the bed and is available for regeneration. The process of this patent document includes the use of an initial bed of silica gel or alumina for moisture removal and a second bed of 13X zeolite for carbon dioxide removal. The principle of retaining heat of adsorption in PSA beds is well established in the art.

Most of the prior art PSA air purification processes, with the exception of DE-A-3,045,451, utilise an initial bed or layer containing activated alumina or silica gel for water vapour removal and then a zeolite bed or layer for carbon dioxide removal. DE-A- 3,045,451 utilises zeolite particles to adsorb the bulk of the water vapour and carbon dioxide present and then utilises a layer of activated alumina to remove low concentrations of both impurities that remain from the first bed. The arrangement of the adsorbent layers in this manner is alleged to reduce the formation of cold spots in the adsorbent beds.

US-A- 5,232,474 teaches the removal of carbon dioxide from a gas stream containing at least 250 ppm by volume of carbon dioxide by PSA in an alumina adsorption bed that is sized sufficiently large to remove at least 75 mole percent of the carbon dioxide in the gas stream. The process is stated to be particularly useful for removing substantially all of the carbon dioxide and water vapour from a stream of ambient air prior to separating the components of the air in a cryogenic air separation unit.

Efforts are continuously undertaken to reduce or eliminate formation of cold spots in zeolite beds during the pre-purification of air by PSA processes. The present invention provides a process which accomplishes this goal.

In its broadest sense, the invention comprises a method of removing carbon dioxide from a carbon dioxide-containing gas comprising subjecting the gas to a pressure swing adsorption process using an adsorption zone containing combined activated alumina and a selected zeolite, the selected zeolite more strongly adsorbing carbon dioxide than the gas, i.e. being carbon dioxide selective. In a first embodiment, the adsorbent comprises a blend of activated alumina and the selected zeolite. In a second embodiment, the adsorbent comprises a composite of activated alumina and zeolite. Typically, a "blend" is formed by mixing beads of activated alumina and beads of zeolite to form a homogeneous mixture, whereas typically in a "composite", each adsorbent bead contains both activated alumina and zeolite. The adsorbent may alternatively comprise a mixture of (i) activated alumina, (ii) the selected zeolite and (iii) a composite of activated alumina and the selected zeolite.

The invention is particularly useful for the pre-purification of air, and is particularly suitable for pre-purifying ambient air, which generally contains both water vapour and carbon dioxide. In particular, the invention relates to the reduction or elimination of the cold spot generally formed in zeolite adsorbent layers during the purification of air by pressure swing adsorption, which results from the adsorption of a major component of the air, e. g. nitrogen or oxygen.

In one embodiment in which ambient air is purified using an adsorbent comprising combined alumina and zeolite, both water vapour and carbon dioxide are removed as the ambient air passes through a layer of combined activated alumina and zeolite. In another embodiment in which ambient air is purified using a preliminary zone of a desiccant, the desiccant is preferably activated alumina, silica gel, zeolite 3A or mixtures of these. When the preliminary zone contains activated alumina, substantially all of the water vapour and some of the carbon dioxide are removed as the ambient air passes through the preliminary zone and the remaining carbon dioxide is removed as the air passes through the combined activated alumina and zeolite. In the embodiment in which ambient air is purified using a preliminary zone containing only silica gel and/or zeolite 3A, substantially all of the water vapour is removed as the ambient air passes through the preliminary zone and the carbon dioxide is removed as the air passes through the combined activated alumina and zeolite.

In any of the above embodiments, the layer of activated alumina and zeolite contains about 40 to about 95 weight percent activated alumina and about 5 to about 60 weight percent zeolite. In preferred embodiments, the zeolite is type X zeolite, type Y zeolite, 4A zeolite, 5A zeolite or mixtures of these. In more preferred embodiments, the zeolite is zeolite 4A, zeolite 5A, zeolite 13X or mixtures of these. In most preferred embodiments, the layer of activated alumina and zeolite contains about 50 to about 80 weight percent activated alumina and about 20 to about 50 weight percent zeolite.

The method according to the invention will now be described by way of example with reference to the accompanying drawings, in which:

Figure 1 is a schematic representation showing bed outlet temperature as a function of time for a prior art PSA process.

Figure 2 is a schematic representation showing bed outlet temperature as a function of time for a PSA process of this invention.

This invention can be practised using conventional PSA equipment and processes such as are described in US-A- 5,232,474 to which the reader is referred.

Many zeolites, such as zeolite 13X, are highly selective for the adsorption of carbon dioxide from gas streams. Unfortunately, however, as noted above, zeolites adsorb a substantial quantity of air when they are used for the removal of carbon dioxide from air streams. During the desorption or regeneration of zeolite adsorbents in PSA air pre-purification processes, adsorbed air is very rapidly desorbed in an adiabatic manner, thus creating an acute drop in temperature. FIG. 3 of DE-A- 3,045,451 shows that a temperature drop of about 20° C. in the zeolite layer during desorption is possible for adsorption at 10° C. DE-A- 3,702,290 discloses that, in a process utilising activated alumina or silica gel for water vapour removal and 13X zeolite for carbon dioxide removal, desorption takes place at a temperature about 30° C lower than the adsorption temperature. When desorption occurs at a temperature much lower than the adsorption temperature, the amount of regeneration gas required for desorption is much higher than when desorption and adsorption occur at nearly the same temperature. A large temperature difference between adsorption and desorption also leads to inefficient regeneration of the adsorbent bed, thereby requiring the use of larger amounts of adsorbents. In addition, the effect of the "cold zone" becomes more severe with time and it can both increase in size and move within the bed. All of these factors can lead to operational instabilities. It will be appreciated by those skilled in the art that, because of the factors cited above, the sharp drop in temperature associated with the use of zeolite is undesirable both in terms of cost and operational considerations.

The use of activated alumina in combination with a zeolite for the adsorption of impurity levels of carbon dioxide from gas streams such as atmospheric air by PSA provides the advantage of reduction or elimination of the cold zone that generally forms in zeolite-containing beds when zeolites are used alone in such processes. This comes about because of a combination of factors.

The first significant factor that provides reduced formation of a cold zone is that activated alumina has a greater heat capacity than do zeolites. Because of this, heat and cold are dissipated much more rapidly in a mixed layer of activated alumina and zeolite in which the activated alumina is uniformly distributed throughout the layer than would be the case if a layer containing only zeolite were used. Rapid dissipation of the cold inhibits formation of a cold zone in the layer.

The second important factor is that cold zones are not formed to any great extent in a bed of activated alumina when the activated alumina is used for the adsorptive separation of carbon dioxide from air by PSA. This comes about because activated alumina adsorbs significantly less air than do zeolites. As stated in US-A- 5,232,474, experiments carried out at a pressure of 0.97 MPa (140 psia) and 25°C suggest that a unit volume of 13X zeolite adsorbs about three times as much air as a comparable unit volume of activated alumina. Since cold spot formation is caused by the adsorption and rapid desorption of air (or its major components) under PSA conditions, and activated alumina adsorbs very little of these gases, very little variation in temperature is experienced by a bed of activated alumina during use of the activated alumina for the removal of carbon dioxide from air by PSA.

As discussed in US-A- 5,232,474, the replacement of some of the zeolite by activated alumina in PSA processes for the adsorption of carbon dioxide from air results in a reduction in vent gas loss of 50% or more, since activated alumina is more easily regenerated than zeolites. This provides a considerable savings in energy consumed in the PSA process.

The combination adsorbent used in this invention has the benefit that the adsorbent layer can be smaller than an all activated alumina layer for the PSA removal of carbon dioxide from gases because of the more effective and efficient adsorptive properties of zeolites. Yet, the replacement of some of the zeolite does not appreciably detract from the attractiveness of using zeolites such as 13X zeolite for the PSA prepurification of air, since activated alumina has the advantage over 13X zeolite that it can be more easily and more completely regenerated than 13X zeolite in PSA processes.

The term "activated alumina" as used herein refers to such materials as are commercially available. Activated alumina may be 100% alumina, but in most commercial products it generally contains small percentages of other materials, such as ferric oxide, sodium oxide, silica and the like. Activated aluminas suitable for use in the process of the invention include F-200 activated alumina, sold by Alcoa Chemical Co. and A-201 activated alumina, sold by LaRoche Industries, Inc. Any of the above products can be used in the process of the invention.

The zeolites useable in the invention include any natural and synthetic zeolites that preferentially adsorb carbon dioxide from gas streams, relative to the other gaseous components of the gas stream. Suitable natural zeolites include faujasite, chabazite, erionite, mordenite, as disclosed in US-A- 3,266,221 and clinoptilolite, as disclosed in US-A- 5,587,003. Suitable synthetic zeolites include type X zeolite, type A zeolite, type Y zeolite. The zeolites of the X type include commercially available 13X and low silica type X zeolite (LSX), as disclosed in US-A- 5,531,808. Particularly preferred type zeolites are zeolite 13X, zeolite 5A, zeolite 4A and sodium Y zeolite.

The activated alumina-zeolite adsorbent can be in the form of a blended mixture of the two components or it can be in the form of a composite formed, for example, by agglomerating the activated alumina and zeolite by known techniques. The formation of the activated alumina-zeolite adsorbent, either as a blend or as a composite forms no part of this invention.

It may be desirable to include a preliminary adsorption zone of a desiccant to remove water vapour from the gas stream being treated. This is preferable when the gas stream contains considerable amounts of water vapour. Suitable desiccants include activated alumina, silica gel, zeolite 3A and mixtures of these. The preliminary adsorption zone of desiccant will, of course, be positioned upstream of the combined activated alumina-zeolite adsorbent. When two adsorption zones are employed they may be present in separate vessels or in a single vessel with a suitable barrier between them to prevent comingling. A single vessel is preferred because of the lower capital cost involved in using such.

The PSA cycle may contain other steps in addition to the fundamental steps of adsorption and regeneration, and it is commonplace to have two or more adsorbent beds cycled 180° out of phase to assure a pseudo-continuous flow of desired product. While it is conventional for the adsorption step of the PSA cycle to be carried out under pressure, it can run at ambient pressure with desorption under vacuum.

It will be appreciated that it is within the scope of the present invention to utilise conventional equipment to monitor and automatically regulate the flow of gases within the system so that it can be fully automated to run continuously in an efficient manner.

The invention is further illustrated by the following examples in which, unless otherwise indicated, parts, percentages and ratios are on a volume basis.

### EXAMPLE 1 (COMPARATIVE)

In this experiment water-saturated air containing 5 ppm propane and 350-400 ppm carbon dioxide was purified by pressure swing adsorption in a pair of identical adsorption vessels 5.24 inches in diameter and 62 inches high. The vessels were packed with a 56 inch bottom layer of LaRoche A-201 activated alumina and a 6 inch top layer of zeolite 5A (sold by Bayer under the trade designation KEB-404). During the adsorption step of the cycle the feed gas was passed upwardly through the adsorption vessels at temperature of 40°C, a pressure of 65 psig (pounds per square inch gauge) and a flow rate of 15 SCFM (standard cubic feet per minute). During adsorbent regeneration carbon dioxide-free nitrogen was passed downwardly through the adsorption vessels at a flow rate of 9.9 SCFM. The PSA process was carried out with the vessels being operated 180° out of phase. The duration of each adsorption half-cycle was 32 minutes and the steps of the half-cycle (in sequence) were 16 min adsorption/production, 0.5 min countercurrent depressurization, 12.5 min. purge and 3 min. countercurrent repressurization by product backfill.

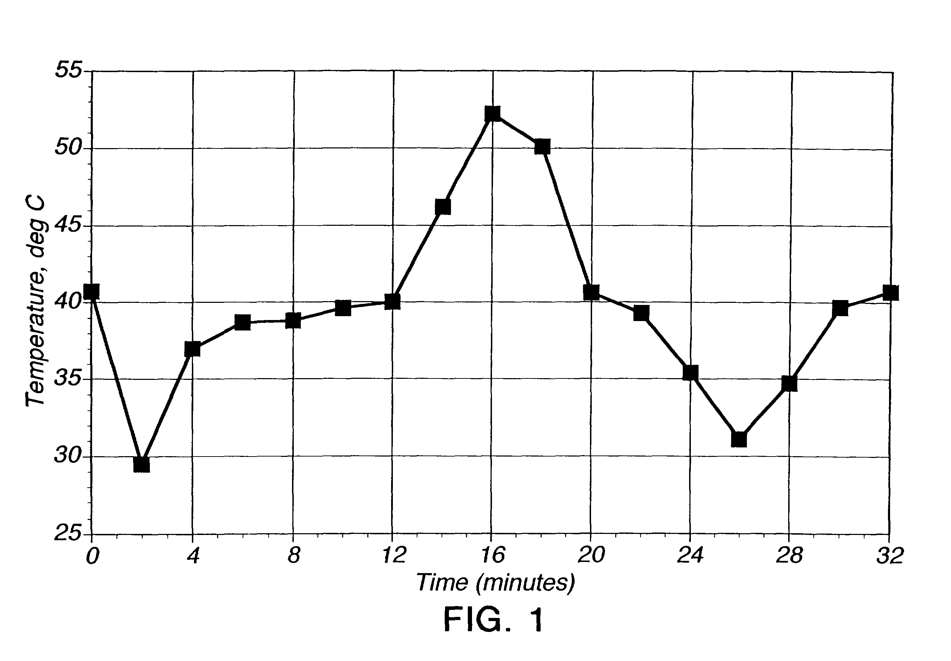

The temperature profile at the product end of the adsorption vessels is shown in Fig. 1. Depressurization, adsorbent regeneration and vessel repressurization took place during minutes 0 to 16 and adsorption/production took place during minutes 16 to 32. Note that a large temperature variation (24°C) occurred at the outlet end of the vessels, with the temperature rising as the bed regeneration proceeded and falling as the adsorption/production step proceeded.

Initially, the product gas contained less than 3 ppb carbon dioxide and less than 0.05 ppm propane. However, after several days of operation the carbon dioxide and propane concentration in the product began to increase with product carbon dioxide concentration rising to over 0.1 ppm and product propane concentration rising to over 0.1 ppm.

### EXAMPLE 2

The procedure of Example 1 was repeated except that the adsorption vessels were packed with a 50 inch bottom layer of LaRoche A-201 activated alumina and a 12 inch top layer of a blend of Bayer KEB-404 5A zeolite and LaRoche A-201 activated alumina. The blend contained 50% activated alumina and 50% 5A zeolite by volume.

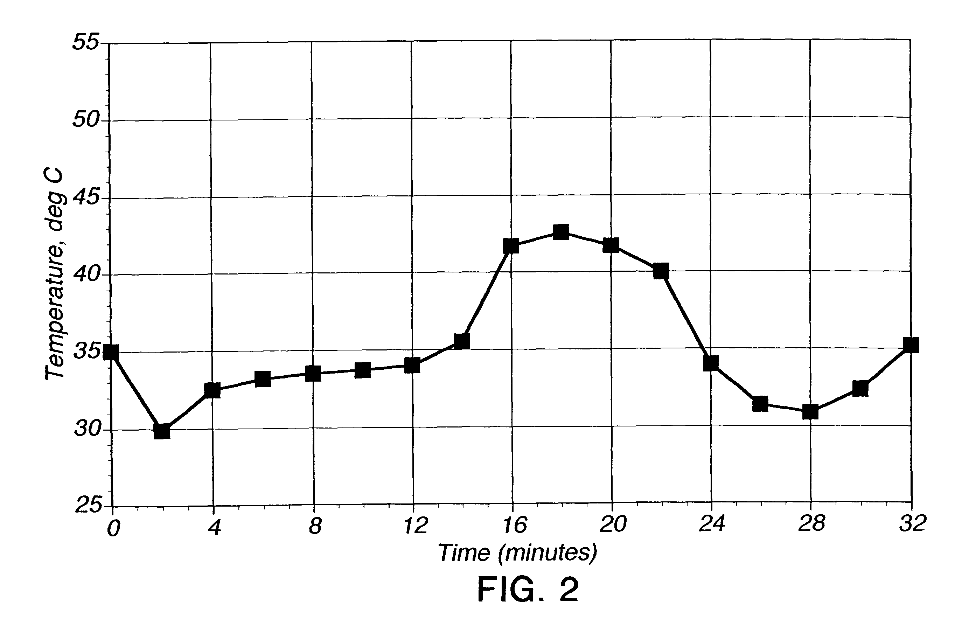

The temperature profile at the product end of the adsorption vessels for this experiment is shown in Fig. 2. Note that a much smaller temperature variation (12°C) occurred during the PSA cycle, indicating that cold spot formation was significantly reduced.

The carbon dioxide and propane concentration in the product gas remained substantially constant at 3 ppb and 0.05 ppm over the several day course of the experiment .

### EXAMPLE 3 (COMPARATIVE)

Experiments were carried out with a PSA unit containing two identical 5.24" beds and a bed height of 62". The beds were loaded with LaRoche A-201 activated alumina (7x12 mesh) and PSA experiments were run with a feed air containing 350-400 ppm CO₂ at 65 psig and 40°C. The regeneration was carried out with CO₂-free nitrogen.

The average amount of regeneration flow was 47% of feed flow. A half-cycle time of 12 minute was used. The PSA cycle used in the process was as follows:

| | |
|---|---|
| Adsorption/purification | 12 minutes |
| Depressurisation | 0.5 minutes |
| Bed regeneration by purge | 8.5 minutes |
| Bed pressurisation by product backfill | 3.0 minutes |

After the product CO₂ concentration reached the steady state, CO₂ concentration profiles were measured and the sieve specific products for various CO₂ concentrations in the product were determined. The sieve specific products were:

| | |
|---|---|
| Sieve specific product for 10 ppm CO₂ in product | = 19.4 SCFM/ft³ sieve |
| Sieve specific product for 1.0 ppm CO₂ in product | = 15.9 SCFM/ft³ sieve |
| Sieve specific product for 3 ppb CO₂ in product | = 8.0 SCFM/ft³ sieve |

SCFM means to standard cubic ft/min. The standard conditions correspond to 70°F and 1 atm.

### EXAMPLE 4

Experiments were carried out with the PSA unit described in Example 3. The beds were loaded with a zeolite/activated alumina composite (30% 4A zeolite) of 7x14 mesh size and PSA experiments were run at identical conditions as in Example 3. After the product CO₂ concentration reached steady state, sieve specific products for various CO₂ concentrations in the product were determined. The sieve specific products were:

| | |
|---|---|
| Sieve specific product for 10 ppm CO₂ in product | = 31.1 SCFM/ft³ |
| Sieve specific product for 1.0 ppm CO₂ in product | = 24.1 SCFM/ft³ sieve |
| Sieve specific product for 3 ppb CO₂ in product | = 12.1 SCFM/ft³ sieve |

Comparison of these results with those in Example 3 indicates that the sieve specific products for the composite bed (for 3 ppb, 1 ppm and 10 ppm CO₂ in the product) are 50-60% higher than the sieve specific products for the standard activated alumina.

Average air loss during the vent for the PSA process of this Example 4 was about 60% lower than the air loss for the PSA process of Example 3. Increase in the sieve specific product for the PSA process of Example 4 leads to lower capital cost compared to the PSA units utilising the standard activated alumina alone (Example 3). Reduction in air loss during vent leads to lower power requirements for the PSA process of this invention.

### EXAMPLE 5

Atmospheric air was purified in a pressure swing adsorption system consisting of a vertical cylindrical stainless steel vessel 91 inches high and having an internal diameter of 2.15 inches. The vessel was packed with adsorbent mixtures of 67 wt.% of 7x12 mesh beads of activated alumina (sold by LaRoche Industries, INC. under the trade designation A-201) and 33 wt.% of 8x12 mesh beads of 13X (sold by UOP under the trade designation Molsiv adsorbent 13XAPG). The PSA cycle included as steps: pressurisation to 5 bara, - 300 sec.; adsorption at 5 bara - 1440 sec.; depressurization to 1 bara - 60 sec.; and purge regeneration at 1.3 bara - 1080 sec. The gas flow rates during the adsorption and purge regeneration steps were 3.9 SCFM, and 3.0 SCFM., respectively. The pressurisation step was carried out by charging carbon dioxide-free and water vapour-free nitrogen into the adsorption vessel. During the adsorption step compressed air saturated with water vapour and containing 350-400 ppm carbon dioxide was passed upwardly through the adsorption vessel at about 25°C. Purge regeneration was carried out by passing water vapour-free and carbon dioxide-free nitrogen through the adsorption vessel at about 25°C. During the process the carbon dioxide and water vapour content at various levels of the adsorption vessel were measured using a carbon dioxide analyser (Horiba, model GA-350) and a moisture analyser (Panametrics, Series 3), respectively.

The above-described PSA cycle was repeated continuously more than 200 times. It was found that both CO₂ and water vapour concentration in the purified air streams from bed height of 87.5 inches and above were below the carbon dioxide and water vapour detection limits (< 10 ppb and <0.1 ppm, respectively).

The adsorbent specific product (calculated using the equation: feed flow rate x feed time/adsorbent weight needed to produce air containing not more than about 3 ppb carbon dioxide) was about 10.2 SCFM/ft³ of composite adsorbent. This is higher than the specific product for the single alumina layer as in Example 3.

Although the invention has been described with particular reference to specific equipment arrangements and to specific experiments, these features are merely exemplary of the invention and variations are contemplated. For example, PSA cycles including steps other than those described above can be employed, and layers of other adsorbents, such as activated carbon, can be used in the process for the removal of other impurities. Furthermore, the process can be used to remove carbon dioxide from other gas streams.

## Claims

1. A method of removing carbon dioxide from a gas stream comprising subjecting the gas stream to a pressure swing adsorption process using a combined adsorbent comprising activated alumina and a carbon dioxide-selective zeolite.

2. A method according to claim 1, wherein said combined adsorbent comprises (a) a blend of activated alumina and zeolite, (b) a composite of activated alumina and zeolite or (c) a mixture of (a) and (b).

3. A method according to claim 1 or claim 2, wherein said gas stream is air.

4. A method according to claim 3 wherein said air contains water vapour.

5. A method according to claim 4, wherein said water vapour is removed as said air passes through said combined adsorbent of activated alumina and zeolite.

6. A method according to claim 4, wherein said gas stream is passed through a desiccant selected from activated alumina, silica gel, zeolite 3A and mixtures of these positioned upstream of a layer of said combined activated alumina and zeolite.

7. A method according to claims 1, 3 or 4, wherein the combined adsorbent is arranged in a layer containing from about 40 to 95 weight percent activated alumina and from 5 to 60 weight percent zeolite.

8. A method according to any one of the preceding claims, wherein said zeolite is type X zeolite, type A zeolite, type Y zeolite or mixtures of these.

9. A method according to claim 8, wherein said zeolite is zeolite 4A, zeolite 5A, zeolite 13X or mixtures of these.

10. A method according to anyone of the preceding claims, wherein said air contains one or more hydrocarbons and said one or more hydrocarbons are removed from said air as it passes through said combined adsorbent of activated alumina and zeolite.
